(19) Europäisches Patentamt
European Patent Office
Office européen des brevets

(11) EP 2 580 947 B1

(12) EUROPÄISCHE PATENTSCHRIFT

(45) Veröffentlichungstag und Bekanntmachung des Hinweises auf die Patenterteilung:
**31.12.2014 Patentblatt 2015/01**

(21) Anmeldenummer: **11714511.0**

(22) Anmeldetag: **05.04.2011**

(51) Int Cl.:
*H05H 5/06* (2006.01)    *G21B 3/00* (2006.01)
*G21B 1/19* (2006.01)    *G21B 1/15* (2006.01)

(86) Internationale Anmeldenummer:
**PCT/EP2011/055235**

(87) Internationale Veröffentlichungsnummer:
**WO 2011/154172 (15.12.2011 Gazette 2011/50)**

(54) **BESCHLEUNIGER FÜR ZWEI TEILCHENSTRAHLEN ZUM ERZEUGEN EINER KOLLISION**

ACCELERATOR FOR TWO PARTICLE BEAMS FOR PRODUCING A COLLISION

ACCÉLÉRATEUR POUR DEUX FAISCEAUX DE PARTICULES EN VUE DE LA PRODUCTION D'UNE COLLISION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.06.2010 DE 102010023339**

(43) Veröffentlichungstag der Anmeldung:
**17.04.2013 Patentblatt 2013/16**

(73) Patentinhaber: **Siemens Aktiengesellschaft 80333 München (DE)**

(72) Erfinder: **HEID, Oliver 91052 Erlangen (DE)**

(56) Entgegenhaltungen:
**EP-A2- 0 441 261    DE-A1-102009 023 305**
**US-A- 3 386 883**

• **A.G. RUGGIERO: "Nuclear fusion of Protons with Boron", BROOKHAVEN NATIONAL LABORATORY, ACCELERATOR PHYSICS TECHNICAL NOTE AD/AP-48, September 1992 (1992-09), Seiten 1-19, XP000002657887, Upton, NY, USA**
• **MACLEOD, C. AND GOW, K.S.: "A Reconsideration of Electrostatically Accelerated and Confined Nuclear Fusion for Space Applications", JOURNAL OF THE BRITISH INTERPLANETARY SOCIETY (JBIS) (ISSN 0007-084X), Bd. 63, Nr. 5/6, 6. Dezember 2010 (2010-12-06), Seiten 192-205, XP000002657888,**

**Beschreibung**

Es gibt Kernreaktionsgeräte, bei denen Strahlen beschleunigter Teilchen aufeinander gerichtet werden, um eine Kollision auszulösen.

So ist z.B. bekannt, dass die Reaktionspartner einer Proton-[11]Bor-Kernfusionsreaktion eine kinetische Energie von über 600 keV relativ zueinander besitzen sollen. Im Falle einer Fusion werden 8.7 MeV Energie freigesetzt.

In der US3386883A wird eine Apparatur zur kontrollierten Kernfusion offenbart, die mehrere konzentrische Elektroden und eine Mehrzahl von Ionenkanonen auf der Außenseite einer die anderen Elektroden umhüllenden Anode umfasst. Die von den Ionenkanonen gebildeten Ionenstrahlen kreuzen sich im Zentrum einer innerhalb der Anode angeordneten Kathode, wobei Öffnungen in den verschiedenen Elektroden den Durchtritt der Ionenstrahlen erlauben. Im Inneren des Aufbaus erreichen die Ionen eine zur Kernfusion ausreichende Energie.

Es ist die Aufgabe der Erfindung, einen Beschleuniger mit einer energieeffizienten Anordnung zur Auslösung von Kernreaktionen bereitzustellen.

Die Aufgabe wird gelöst durch die Merkmale der unabhängigen Ansprüche. Weiterbildungen der Erfindung finden sich in den Merkmalen der abhängigen Ansprüche.

Der erfindungsgemäße Beschleuniger zur Beschleunigung von zwei Strahlen geladener Teilchen und zum Erzeugen einer Kollision zwischen den beiden Strahlen, weist auf:

- eine Potentialfeld-Vorrichtung zum Erzeugen eines elektrostatischen Potentialfeldes, das derart beschaffen ist, dass durch das elektrostatische Feld die zwei Strahlen der geladenen Teilchen beschleunigt bzw. entschleunigt werden können,
- eine Reaktionszone, in der die Kollision der beiden geladenen Teilchenstrahlen stattfindet,
- eine erste Beschleunigungsstrecke für den ersten Strahl im Potentialfeld, welche erste Beschleunigungsstrecke auf die Reaktionszone hin gerichtet ist,
- eine zweite Beschleunigungsstrecke für den zweiten Strahl im Potentialfeld, welche zweite Beschleunigungsstrecke ebenfalls auf die Reaktionszone hin gerichtet ist.

Die Reaktionszone ist geometrisch in Bezug auf das Potentialfeld und auf die erste und zweite Beschleunigungsstrecke derart angeordnet, dass die Teilchen der zwei Strahlen bei Betrieb des Beschleunigers zur Reaktionszone hin entlang der ersten Beschleunigungsstrecke und der zweiten Beschleunigungsstrecke beschleunigt werden. Nach Wechselwirkung in der Reaktionszone und Durchtritt durch die Reaktionszone im Potentialfeld werden die Teilchen, die nicht miteinander kollidieren, wieder entschleunigt, sodass die durch die Potentialfeld-Vorrichtung aufgewendete Energie zur Beschleunigung der beiden Strahlen zur Reaktionszone hin durch die Entschleunigung zumindest teilweise rückgewinnbar ist.

Die Potentialfeld-Vorrichtung umfasst einen Kondensatorstapel aus konzentrisch zueinander angeordneten Elektroden

- mit einer ersten Elektrode (37), welche auf ein erstes Potential bringbar ist,
- mit einer zweiten Elektrode (39), die zur ersten Elektrode (37) konzentrisch angeordnet ist und auf ein zweites, vom ersten Potential unterschiedliches Potential bringbar ist, sodass sich zwischen der ersten Elektrode und der zweiten Elektrode ein beschleunigendes Potential ausbildet,
- wobei sich die Reaktionszone (75) im Inneren der ersten Elektrode (37) befindet,

wobei die Potentialfeld-Vorrichtung eine oder mehrere Zwischenelektroden (33), die konzentrisch zwischen der ersten Elektrode (37) und der zweiten Elektrode (39) angeordnet sind, umfasst, und wobei eine Schaltvorrichtung (35) vorhanden ist, mit der die Elektroden (33, 37, 39) des Kondensatorstapels verbunden sind und welche derart ausgebildet ist, dass bei Betrieb der Schaltvorrichtung (35) die konzentrisch zueinander angeordneten Elektroden (33, 37, 39) des Kondensatorstapels auf anwachsende Potentialstufen gemäß der Reihenfolge ihrer Anordnung bringbar sind.

Die vorgeschlagene Anordnung verwendet folglich ein elektrostatisches Beschleunigungsfeld zur Beschleunigung von mindestens zwei Ionenstrahlen als Reaktionspartner. Nach Beschleunigung und Durchtritt der Reaktandenstrahlen durch die Interaktionszone werden die geladenen Teilchen in dem elektrostatischen Feld wieder auf eine geringe Geschwindigkeit abgebremst. Auf diese Weise wird die kinetische Energie der Teilchen, die nicht miteinander reagiert haben, im Wesentlichen und zu großen Teilen wieder zurückgewonnen.

Auf diese Weise kann auch ein geringer Reaktionsquerschnitt toleriert werden. Es wurde nämlich erkannt, dass bei Anordnungen, die den Strahl nach Durchtritt durch die Reaktionszone vernichten, z.B. durch einen sogenannten Beam-Dump, ein großer Energieverlust auftreten kann. Z.B kann dies bei einem zu geringen Reaktionsquerschnitt der Reaktanden für Kernfusionsreaktionen dazu führen, dass die Energieausbeute insgesamt negativ ist, trotz hoher Energieausbeute bei der eigentlichen Fusionsreaktion.

Diese negative Netto-Energieausbeute kann auch bei Verwendung eines festen Targets negativ ausfallen, da die kinetische Energie auch in diesem Fall nicht zurückgewonnen wird.

Die vorgeschlagene Anordnung löst die Probleme, da ein Großteil der für die Beschleunigung der Teilchen aufgewandten Energie durch die geometrische Anordnung des elektrostatischen Potentialfeldes, der Strahlverläufe und der Reaktionszone zueinander wieder zurückgewonnen wird.

Da ein Teil der Teilchen die Reaktionszone ohne wesentliche Beeinflussung durchtreten, kann durch die geometrische Anordnung im Potentialfeld 60%, insbesondere 70% oder höchst insbesondere 80% oder gar 90% der aufgewendeten Energie für die Beschleunigung der Teilchenstrahlen wieder zurückgewonnen werden.

Es ist daher möglich, bei gegebenem Energieaufwand starke Teilchenstrahlen anzuwenden und damit eine hohe Reaktionsrate zu erreichen. Im Unterschied zu einem Plasmareaktor ist zusätzlich die Anwesenheit von Elektronen in der Reaktionszone minimiert, so dass z.B. Verluste durch Strahlung und Impulsübertrag minimiert werden.

Zusätzlich kann der Beschleuniger eine erste Entschleunigungsstrecke für den ersten Strahl im Potentialfeld, welche erste Entschleunigungsstrecke von der Reaktionszone weg gerichtet ist aufweisen. Der Beschleuniger kann auch für den zweiten Strahl eine zweite Entschleunigungsstrecke im Potentialfeld aufweisen, welche zweite Entschleunigungsstrecke von der Reaktionszone weg gerichtet ist. Der Beschleuniger muss folglich nicht für jeden Strahl eine Entschleunigungsstrecke aufweisen. Es kann bspw. zur teilweisen Energierückgewinnung bereits ausreichen, einen der beiden Strahlen nach Durchtritt durch die Reaktionszone zu entschleunigen.

Der Beschleuniger kann zusätzlich eine erste Quelle zur Bereitstellung geladener Teilchen für den ersten Strahl und zur Einspeisung derselben in die erste Beschleunigungsstrecke umfassen. Der Beschleuniger kann ebenso eine zweite Quelle eine zweite Quelle zur Bereitstellung geladener Teilchen für den zweiten Strahl und zur Einspeisung derselben in die zweite Beschleunigungsstrecke umfassen.

Der Beschleuniger kann zusätzlich einen ersten Fänger für die entschleunigten Teilchen des ersten Strahls umfassen, der sich am Ende der ersten Strahlstrecke befindet und insbesondere negativ geladen ist. Der Beschleuniger kann ebenso einen zweiten Fänger für die entschleunigten Teilchen des zweiten Strahls umfassen, der sich am Ende der zweiten Strahlstrecke befindet und insbesondere negativ geladen ist. Die Fängerelektroden sammeln die entschleunigten Teilchen ein. Das Potential, auf dem die Fängerelektroden liegen, ist derart gewählt, dass die Fängerelektroden die entschleunigten Teilchen einfangen werden. Das Potential der Fängerelektroden ist üblicherweise auf den Ort im Potentialfeld abgestimmt, an dem die Fängerelektroden angeordnet sind.

Die Teilchen des ersten Strahls können Protonen sein. Die Teilchen des zweiten Strahls können $^{11}$Bor-Ionen sein. Die Potentialfeld-Vorrichtung kann insbesondere derart ausgebildet sein, dass durch das erzeugte Potentialfeld eine Kollisionsenergie von über 600 keV erreicht werden kann. Auf diese Weise kann der Beschleuniger zur Proton-$^{11}$Bor-Fusionsreaktion eingesetzt werden.

Die Potentialfeld-Vorrichtung kann einen Kondensatorstapel aus konzentrisch zueinander angeordneten Elektroden umfassen, mit einer ersten Elektrode, welche auf ein erstes Potential gebracht werden kann und mit einer zweiten Elektrode, die konzentrisch um die erste Elektrode angeordnet ist und die auf ein zweites, vom ersten Potential unterschiedliches Potential gebracht werden kann, sodass sich zwischen der ersten Elektrode und der zweiten Elektrode ein beschleunigendes Potential ausbildet, wobei sich die Reaktionszone im Inneren der ersten Elektrode befindet. Die erste Elektrode kann folglich eine negativ geladene Hochspannungselektrode sein.

Die Potentialfeld-Vorrichtung kann eine oder mehrere Zwischenelektroden aufweisen, die konzentrisch zwischen der ersten Elektrode und der zweiten Elektrode angeordnet sind, umfasst. Eine Schaltvorrichtung kann vorhanden sein, mit der die Elektroden des Kondensatorstapels verbunden sind und welche derart ausgebildet ist, dass bei Betrieb der Schaltvorrichtung die konzentrisch zueinander angeordneten Elektroden des Kondensatorstapels auf anwachsende Potentialstufen gemäß der Reihenfolge ihrer Anordnung gebracht werden. Die Hochspannungselektrode kann dabei die bei der konzentrischen Anordnung am weitesten Innen liegende Elektrode sein, während die äußerste Elektrode z.B. eine Masseelektrode sein kann.

Durch die Schaltvorrichtung mit Elektronenröhren können die Elektroden des Kondensatorstapels mit einer Pump-Wechselspannung geladen werden. Die Amplitude der Pump-Wechselspannung kann vergleichsweise klein gegenüber der erreichbaren DC-Hochspannung sein. Dieser Aufbau der Potentialfeld-Vorrichtung erlaubt es, eine hohe Beschleunigung bei kompaktem Aufbau bereitzustellen.

Die konzentrische Anordnung ermöglicht insgesamt eine kompakte Bauweise. Zur günstigen Ausnutzung des Isolationsvolumens, also des Volumens zwischen der inneren und der äußeren Elektrode, sind eine oder mehrere konzentrische Zwischenelektroden auf geeignete Potentiale gebracht. Die Potentialstufen sind sukzessive ansteigend und können derart gewählt werden, dass sich im Inneren des gesamten Isolationsvolumens eine weitgehend gleichmäßige Feldstärke ergibt.

Im Isolationsvolumen kann sich Hochvakuum befinden. Eine Verwendung von isolierenden Materialien hat den Nachteil, dass die Materialien bei Belastung durch ein elektrisches Gleichfeld zur Anschoppung von internen Ladungen - die insbesondere durch ionisierende Strahlung beim Betrieb des Beschleunigers hervorgerufen werden - neigen. Die angeschoppten, wandernden Ladungen rufen in allen physischen Isolatoren eine stark inhomogene elektrische Feldstärke hervor, die dann zur lokalen Überschreitung der Durchschlagsgrenze und damit Ausbildung von Funkenkanälen führt. Eine Isolation der Elektroden des Elektrodenstapels durch Hochvakuum zueinander vermeidet derartige Nachteile. Die im stabilen Betrieb ausnutzbare elektrische Feldstärke lässt sich dadurch vergrößern. Die Anordnung ist damit im Wesentlichen - bis auf wenige Komponenten wie z.B. die Aufhängung der Elektroden - frei von Isolatormaterialien. Es ist dadurch eine effiziente, d.h. platzsparende und robuste Isolation der Hochspannungselektrode möglich.

Die eingebrachten Zwischenelektroden erhöhen zudem die Durchschlagsfeldstärkegrenze, sodass höhere Gleichspannungen erzeugt werden können als ohne Zwischenelektroden. Dies beruht darauf, dass die Durchbruchsfeldstärke in Vakuum in etwa umgekehrt proportional zur Quadratwurzel der Elektrodenabstände ist. Die eingeführte/n Zwischenelektrode/n, mit denen das elektrische Feld im Inneren der Gleichspannungs-Hochspannungsquelle gleichmäßiger wird, tragen gleichzeitig zu einer vorteilhaften Erhöhung der möglichen, erreichbaren Feldstärke bei.

Wenn eine derartige Gleichspannungs-Hochspannungsquelle als Potentialfeld-Vorrichtung eingesetzt wird, kann bei kompakter Bauweise eine Teilchenenergie im MV-Bereich erreicht werden.

In einer vorteilhaften Ausführungsform umfasst die Schaltvorrichtung eine Hochspannungskaskade, insbesondere eine Greinacher-Kaskade oder eine Cockcroft-Walton-Kaskade. Mit einer derartigen Vorrichtung kann mithilfe einer vergleichsweise geringen Wechselspannung die erste Elektrode, die zweite Elektrode sowie die Zwischenelektroden zur Erzeugung der Gleichspannung geladen werden.

Diese Ausführungsform beruht auf der Idee einer Hochspannungserzeugung, wie sie beispielsweise durch eine Greinacher-Gleichrichterkaskade ermöglicht wird. In einem Beschleuniger eingesetzt, dient die elektrische Potentialenergie dazu, kinetische Energie der Partikel umzuwandeln, indem das hohe Potential zwischen der Teilchenquelle und dem Ende der Beschleunigungsstrecke angelegt wird.

Bei einer Ausführungsvariante ist der Kondensatorstapel durch einen Spalt, der durch die Elektroden verläuft, in zwei voneinander getrennte Kondensatorketten aufgeteilt. Durch eine Trennung der konzentrischen Elektroden des Kondensatorstapels in zwei voneinander getrennte Kondensatorketten können die zwei Kondensatorketten in vorteilhafter Weise für die Ausbildung einer kaskadierten Schaltvorrichtung wie einer Greinacher- oder Cockcroft-Walton-Kaskade verwendet werden. Jede Kondensatorkette stellt dabei eine Anordnung ihrerseits konzentrisch zueinander angeordneter (Teil-)Elektroden dar.

Bei einer Ausbildung des Elektrodenstapels als Kugelschalenstapel kann die Trennung z.B. durch einen Schnitt entlang des Äquators erfolgen, der dann zu zwei Halbkugelstapel führt.

Die einzelnen Kondensatoren der Ketten können bei einer derartigen Schaltung jeweils auf die Spitze-Spitze-Spannung der primären Eingangswechselspannung, die zum Laden der Hochspannungsquelle dient, geladen werden, so dass oben genannte Potentialäquilibrierung, eine gleichmäßige elektrische Feldverteilung und damit eine optimale Ausnutzung der Isolationsstrecke auf einfache Weise erreicht wird.

In vorteilhafter Weise kann die Schaltvorrichtung, welche eine Hochspannungskaskade umfasst, die zwei voneinander getrennten Kondensatorketten miteinander verbinden und insbesondere in dem Spalt angeordnet sein. Die Eingangswechselspannung für die Hochspannungskaskade kann zwischen den beiden äußersten Elektroden der Kondensatorketten angelegt werden, da diese z.B. von außen zugänglich sein können. Die Diodenketten einer Gleichrichterschaltung lassen sich dann in dem äquatorialen Spalt - und dadurch auf Platz sparende Weise - anbringen.

Die Elektroden des Kondensatorstapels können derart geformt sein, dass sie auf einer Ellipsoid-Oberfläche, insbesondere einer Kugeloberfläche, oder auf einer Zylinder-Oberfläche liegen. Diese Formen sind physisch günstig. Besonders günstig ist die Wahl der Form der Elektroden wie bei einer Hohlkugel bzw. dem Kugelkondensator. Ähnliche Formen wie z.B. bei einem Zylinder sind auch möglich, wobei letzterer allerdings üblicherweise eine vergleichsweise inhomogene elektrische Feldverteilung aufweist.

Die geringe Induktivität der schalenartigen Potentialelektroden erlaubt die Anwendung hoher Betriebsfrequenzen, so dass die Spannungsabsenkung bei Stromentnahme trotz relativ geringer Kapazität der einzelnen Kondensatoren begrenzt bleibt.

In einer Ausführungsform umfasst die Schaltvorrichtung Dioden, welche insbesondere als Elektronenröhren ausgebildet sein können. Dies ist im Vergleich zu Halbleiterdioden vorteilhaft, da nun keine physische Verbindung zwischen den Elektrodenstapeln besteht, die mit einer Durchschlagsgefahr einhergeht, und da Vakuumdioden strombegrenzend wirken und robust gegenüber einer Stromüberlastung oder einer Spannungsüberlastung sind.

Die Dioden der Gleichrichterkette können sogar als Vakuum-Elektronenröhren ohne eigenes Vakuumgefäß ausgebildet sein. In diesem Fall wird das für den Betrieb der Elektronenröhren notwendige Vakuum durch das Vakuum der Vakuumisolation gebildet.

Die Kathoden können als thermische Elektronenemitter z.B. mit Strahlungsheizung durch den äquatorialen Spalt oder als Photokathoden ausgebildet sein. Letztere erlauben durch Modulation der Belichtung z.B. durch Laserstrahlung eine Steuerung des Stroms in jeder Diode und damit des Ladestroms und somit indirekt der Hochspannung.

Die Beschleunigungsstrecke/n bzw. die Entschleunigungsstrecke/n können durch Öffnungen in den Elektroden des Kondensatorstapels gebildet werden. Die Be- bzw. Entschleunigung der Teilchen erfolgt dann durch die Elektroden.

Bei einem Beschleuniger hat die Verwendung von Vakuum zudem den Vorteil, dass kein eigenes Strahlrohr vorgesehen werden muss, das seinerseits wenigstens teilweise eine Isolatoroberfläche aufweist. Auch hier wird vermieden, dass kritische Probleme der Wandentladung entlang der Isolatoroberflächen auftreten würden, da der Beschleunigungskanal nun keine Isolatoroberflächen aufweisen muss.

Ausführungsbeispiele der Erfindung werden anhand der folgenden Zeichnung näher erläutert, ohne jedoch darauf beschränkt zu sein. Darin zeigen:

Fig. 1 eine schematische Darstellung des Aufbaus des Beschleunigers,

Fig. 2 eine schematische Darstellung einer Greinacherschaltung, wie sie aus dem Stand der Technik bekannt ist.

Fig. 3 eine schematische Darstellung eines Schnitts durch eine Potentialfeld-Vorrichtung mit einer Reaktionszone im Zentrum,

Fig. 4 eine schematische Darstellung des Elektrodenaufbaus mit einem Stapel zylinderförmig angeordneter Elektroden,

Fig. 5 eine schematische Darstellung eines Schnitts durch eine Potentialfeld-Erzeugungsvorrichtung nach Fig. 3 mit zum Zentrum hin abnehmenden Elektrodenabstand,

Fig. 6 eine Darstellung der Dioden der Schaltvorrichtung, die als vakuumkolbenfreie Elektronenröhren ausgebildet sind,

Fig. 7 ein Diagramm, das den Ladungsvorgang in Abhängigkeit von Pumpzyklen zeigt, und

Fig. 8 die vorteilhafte Kirchhoff-Form der Elektrodenenden.

Gleiche Teile sind in den Figuren mit denselben Bezugszeichen versehen.

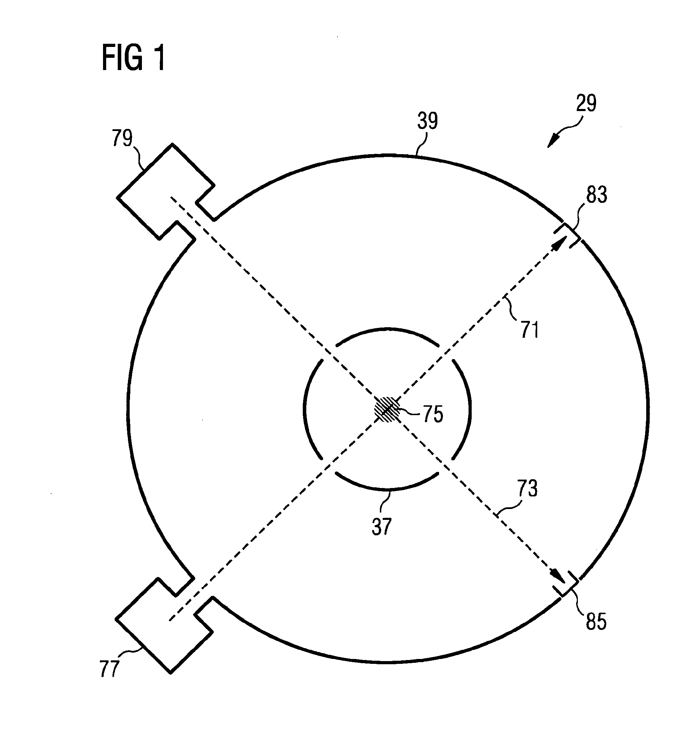

Fig. 1 zeigt eine schematische Darstellung des erfindungsgemäßen Beschleunigers 29 zur Beschleunigung von zwei Strahlen 71, 73 geladener Teilchen und zum Erzeugen einer Kollision zwischen den beiden Strahlen. Anhand dieser Darstellung kann das Prinzip der Funktionsweise erläutert werden.

Der Beschleuniger 29 weist eine Vorrichtung auf, die ein statisches Potentialfeld erzeugt. In dem hier dargestellten Ausführungsbeispiel umfasst die Vorrichtung eine negativ geladene erste, zentrale Elektrode 37, die beispielsweise zylinderoder kugelförmig sein kann. Die zentrale Elektrode 37 umfasst Öffnungen, durch die die beschleunigten Teilchenstrahlen 71, 73 eintreten bzw. wieder austreten können. Eine äußere Elektrode 39 kann auf Masse liegen und umfasst ebenso wie die zentrale Elektrode 37 entsprechende Öffnungen.

Das statische Potentialfeld, das zur Be- bzw. Entschleunigung der Teilchenstrahlen 71, 73 verwendet wird, bildet sich zwischen der zentralen Elektrode 37 und der äußeren Elektrode 39 aus.

Im Inneren der zentralen Elektrode 37 befindet sich die Interaktionszone 75, in der die beiden Teilchenstrahlen 71, 73 miteinander wechselwirken.

Eine erste Ionenquelle 77 befindet sich außerhalb der äußeren Elektrode 39 und stellt eine erste Ionensorte, beispielsweise Protonen - $H^+$ -, bereit. Eine zweite Ionenquelle 79 befindet sich ebenfalls außerhalb der äußeren Elektrode 39 und stellt eine zweite Ionensorte, beispielsweise $^{11}B^{5+}$-Ionen bereit.

Die Ionen werden zu einem ersten Teilchenstrahl 71 bzw. zu einem zweiten Teilchenstrahl 73 geformt und durch das Potentialfeld, das durch die Vorrichtung erzeugt wird, beschleunigt. Nach Durchtritt der beiden Teilchenstrahlen 71, 73 durch die Interaktionszone 75 werden die beiden Teilchenstrahlen 71, 73 wieder entschleunigt, so dass die zur Beschleunigung aufgewendete Energie zu einem großen Teil wieder zurückgewonnen wird. Am Ende der Entschleunigungsstrecke findet sich jeweils eine Fängerelektrode 83, 85 zur Einsammlung der entschleunigten Teilchen. Die Fängerelektroden 83, 85 liegen auf einem geringen negativen Potential, sodass deren Funktion gewährleistet ist.

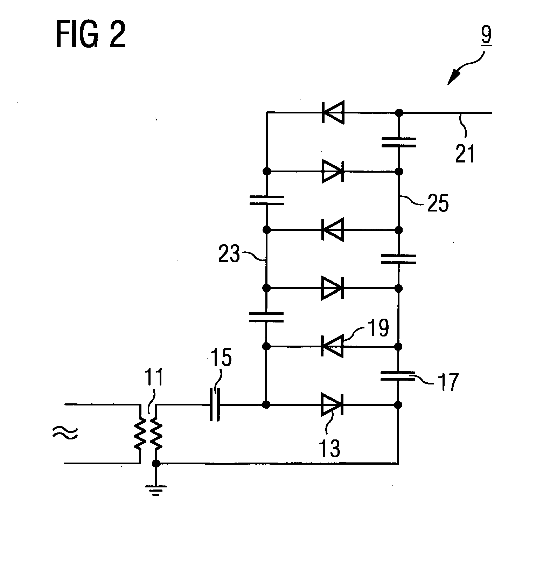

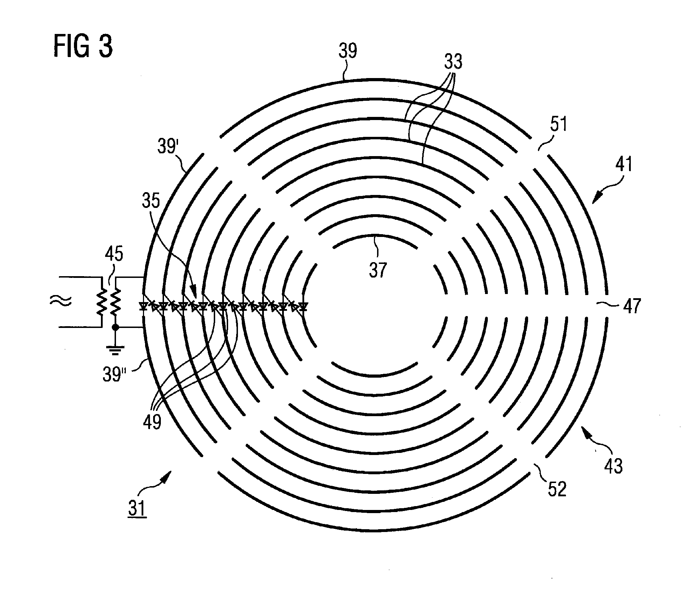

Am Schaltbild in der Fig. 2 soll das Prinzip einer Hochspannungskaskade 9, die gemäß einer Greinacherschaltung aufgebaut ist, verdeutlicht werden. Mit diesem Prinzip lässt sich ein Aufbau der Potentialfeld-Vorrichtung erreichen, der besonders vorteilhaft ist und im Folgenden anhand von Fig. 3 erläutert wird.

An einem Eingang 11 wird eine Wechselspannung U angelegt. Die erste Halbwelle lädt über die Diode 13 den Kondensator 15 auf die Spannung U auf. Bei der darauf folgenden Halbwelle der Wechselspannung addiert sich die Spannung U vom Kondensator 13 mit der Spannung U am Eingang 11, so dass der Kondensator 17 über die Diode 19 nun auf die Spannung 2U aufgeladen wird. Dieser Prozess wiederholt sich in den darauf folgenden Dioden und Kondensatoren, so dass in der in Fig. 1 abgebildeten Schaltung insgesamt am Ausgang 21 die Spannung 6U erzielt wird.

Die Fig. 2 zeigt auch deutlich, wie durch die dargestellte Schaltung jeweils der erste Satz 23 von Kondensatoren eine erste Kondensatorkette und der zweite Satz 25 von Kondensatoren eine zweite Kondensatorkette bildet.

Fig. 3 zeigt einen schematischen Schnitt durch eine Hochspannungsquelle 31 mit einer zentralen Elektrode 37, einer äußeren Elektrode 39 und einer Reihe von Zwischenelektroden 33, die durch eine Hochspannungskaskade 35, deren Prinzip in Fig. 2 erläutert wurde, verschaltet sind und durch diese Hochspannungskaskade 35 geladen werden können. Die Hochspannungsquelle dient als Vorrichtung zur Erzeugung des Potentialfeldes. Die Quellen und die Fängerelektroden sind in Fig. 3 der Übersichtlichkeit halber nicht gezeigt, befinden sich aber an analoger Stelle wie in Fig. 1

Die Elektroden 39, 37, 33 sind hohlkugelförmig ausgebildet und konzentrisch zueinander angeordnet. Die maximale elektrische Feldstärke, die angelegt werden kann, ist proportional zur Kurvatur der Elektroden. Daher ist eine Kugelschalengeometrie besonders günstig.

Im Zentrum liegt die Hochspannungselektrode 37, die äußerste Elektrode 39 kann eine Masseelektrode sein. Durch einen äquatorialen Schnitt 47 sind die Elektroden 37, 39, 33 in zwei voneinander, durch einen Spalt getrennte Halbkugelstapel geteilt. Der erste Halbkugelstapel bildet eine erste Kondensatorkette 41, der zweite Halbkugelstapel eine zweite Kondensatorkette 43.

Dabei werden an die äußersten Elektroden-Schalenhälften 39', 39" jeweils die Spannung U einer Wechselspannungsquelle 45 angelegt. Die Dioden 49 zur Bildung der Schaltung sind im Bereich des Großkreises der Halbhohlkugeln angeordnet, d. h. im äquatorialen Schnitt 47 der jeweiligen Hohlkugeln. Die Dioden 49 bilden die Querverbindungen zwischen den beiden Kondensatorketten 41, 43, die den beiden Sätzen 23, 25 an Kondensatoren aus Fig. 2 entsprechen.

In der hier dargestellten Hochspannungsquelle 31 werden durch Öffnungen in den Elektrodenschalen eine erste Beschleunigungs- bzw. Entschleunigungsstrecke 51 und eine zweite Beschleunigungs- bzw. Entschleunigungsstrecke 52 gebildet.

Um die Hochspannungselektrode 37 zu isolieren, ist die gesamte Elektrodenanordnung durch eine Vakuumisolation isoliert. Unter anderem können dadurch besonders hohe Spannungen der Hochspannungselektrode 37 erzeugt werden, was eine besonders hohe Teilchenenergie zur Folge hat. Es ist aber auch prinzipiell eine Isolierung der Hochspannungselektrode mittels fester oder flüssiger Isolation denkbar.

Die Verwendung von Vakuum als Isolator und die Verwendung eines Zwischenelektrodenabstandes in der Größenordnung von 1 cm ermöglichen es, elektrische Feldstärken von Werten von über 20 MV/m zu erreichen. Darüber hinaus hat die Verwendung von Vakuum den Vorteil, dass der Beschleuniger während des Betriebs nicht unterbelastet werden muss, da die bei der Beschleunigung auftretende Strahlung bei Isolatormaterialien zu Problemen führen kann. Dies erlaubt den Bau kleinerer und kompakterer Maschinen.

Eine Ausführungsform der Hochspannungsquelle sieht vor, die zentrale Elektrode auf ein Potential von -10 MV zu setzen.

Die Hochspannungsquelle kann N = 50 Stufen aufweisen, d.h. also insgesamt 100 Dioden und Kondensatoren. Bei einem inneren Radius von r = 0,05 m und einer Vakuumisolation mit einer Durchbruchfeldstärke von 20 MV/m beträgt der äußere Radius 0,55 m. In jeder Halbkugel finden 50 Zwischenräume mit einem Abstand von 1 cm zwischen benachbarten Kugelschalen.

Eine geringere Anzahl von Stufen reduziert die Anzahl der Ladezyklen und die effektive interne Quellenimpedanz, erhöht jedoch die Anforderungen an die Pump-Ladespannung.

Die im äquatorialen Spalt angeordneten Dioden, die die beiden Hemisphären-Stapel miteinander verbinden, können z.B. in einem spiralartigen Muster angeordnet werden. Die totale Kapazität kann gemäß Gleichung (3.4) 74 pF betragen, die gespeicherte Energie 3.7 kJ. Ein Ladestrom von 2 mA benötigt eine Betriebsfrequenz von ungefähr 100 kHz.

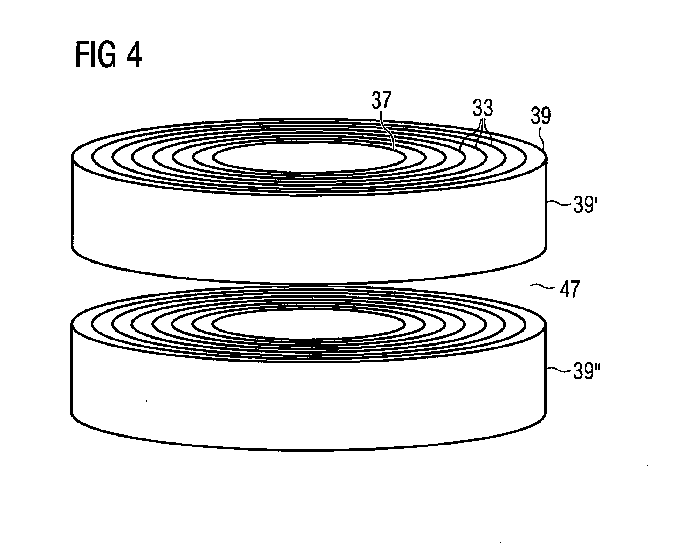

Fig. 4 illustriert eine Elektrodenform, bei dem hohlzylinderförmige Elektroden 33, 37, 39 konzentrisch zueinander angeordnet sind. Durch einen Spalt wird der Elektrodenstapel in zwei voneinander getrennte Kondensatorketten aufgeteilt, welche mit einer analog zu Fig. 2 aufgebauten Schaltvorrichtung verschaltet werden können. Beschleunigungs- bzw. Entschleunigungsstrecken (hier nicht gezeigt) werden durch Öffnungen in den Elektroden des Kondensatorstapels gebildet.

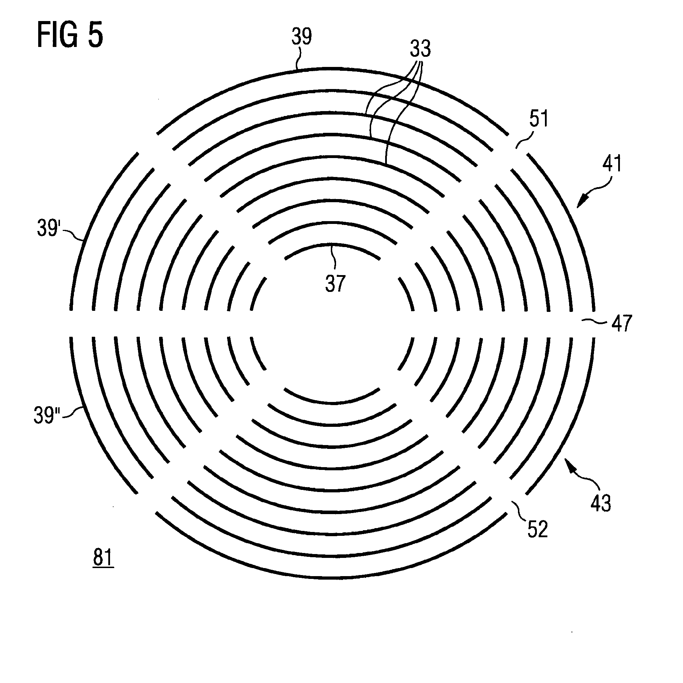

Fig. 5 zeigt eine Weiterbildung 81 der in Fig. 2 gezeigten Hochspannungsquelle, bei der der Abstand der Elektroden 39, 37, 33 zum Zentrum hin abnimmt. Wie unten erläutert lässt sich durch eine derartige Ausgestaltung die Abnahme der an der äußeren Elektrode 39 angelegten Pump-Wechselspannung zum Zentrum hin kompensieren, sodass dennoch zwischen benachbarten Elektrodenpaaren eine im Wesentlichen gleiche Feldstärke herrscht. Hierdurch lässt sich eine weitgehend konstante Feldstärke entlang des Beschleunigungsstrecken 51, 52 erreichen.

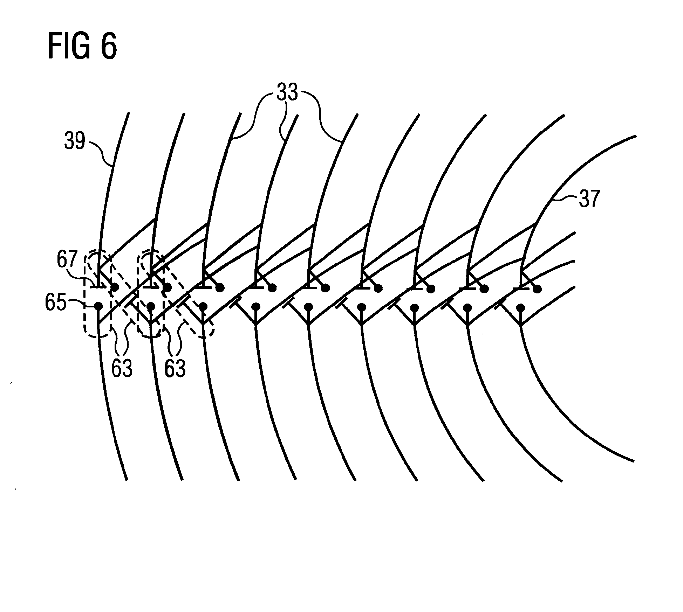

Fig. 6 zeigt eine Ausgestaltung der Dioden der Schaltvorrichtung gezeigt. Die konzentrischen angeordneten, halbkugelschalartigen Elektroden 39, 37, 33 sind der Übersichtlichkeit halber nur angedeutet dargestellt.

Die Dioden sind hier als Elektronenröhren 63 gezeigt, mit einer Kathode 65 und einer gegenüberliegenden Anode 67. Da die Schaltvorrichtung in der Vakuumisolation angeordnet ist, entfällt das Vakuumgefäß der Elektronenröhren, das sonst zum Betrieb der Elektronen notwenig wäre. Die Kathoden können als thermische Elektronenemitter z.B. mit Strahlungsheizung durch den äquatorialen Spalt oder als Photokathoden ausgebildet sein. Letztere erlauben durch Modulation der Belichtung z.B. durch Laserstrahlung eine Steuerung des Stroms in jeder Diode. Der Ladestrom und damit indirekt die Hochspannung kann so gesteuert werden.

Im Folgenden werden eine nähere Ausführungen zu Komponenten der Hochspannungsquelle bzw zu dem Teilchenbeschleuniger gemacht.

Sphärischer Kondensator

Die Anordnung folgt dem in Fig. 1 gezeigten Prinzip, die Hochspannungselektrode im Inneren des Beschleunigers und die konzentrische Masseelektrode an der Außenseite des Beschleunigers anzuordnen.

Ein Kugelkondensator mit innerem Radius r und äußerem Radius R hat die Kapazität

$$C = 4\pi\epsilon_0 \frac{r\,R}{R - r} \quad . \qquad (3.1)$$

Die Feldstärke bei Radius $\rho$ ist dann

$$E = \frac{r\,R}{(R - r)\,\rho^2} U \qquad (3.2)$$

Diese Feldstärke ist quadratisch abhängig vom Radius und nimmt zur inneren Elektrode hin somit stark zu. Bei der Inneren Elektrodenfläche $\rho = r$ ist das Maximum

$$\hat{E} = \frac{R}{r(R - r)} U \qquad (3.3)$$

erreicht. Aus Sicht der Durchbruchsfestigkeit ist dies unvorteilhaft.

Ein hypothetischer sphärischer Kondensator mit einem homogenen elektrischen Feld hätte die Kapazität

$$\bar{C} = 4\pi\epsilon_0 \frac{R^2 + r\,R + r^2}{R - r} \quad . \qquad (3.4)$$

Dadurch, dass im Kaskadenbeschleuniger die Elektroden der Kondensatoren der Greinacherkaskade als Zwischenelektroden auf klar definiertem Potential eingefügt sind, wird die Feldstärkeverteilung über den Radius linear angeglichen, da für dünnwandige Hohlkugeln die elektrische Feldstärke ungefähr gleich dem flachen Fall

$$E \longrightarrow \frac{U}{(R - r)} \quad . \qquad (3.5)$$

mit minimaler maximaler Feldstärke ist.

Die Kapazität zweier benachbarter Zwischenelektroden ist

$$C_k = 4\pi\epsilon_0 \frac{r_k\,r_{k+1}}{r_{k+1} - r_k} \quad . \qquad (3.6)$$

Halbkugelförmige Elektroden und gleicher Elektrodenabstand d = (R-r)/N führt zu $r_k$= r +kd und zu Elektrodenkapazitäten

$$C_{2k} = C_{2k+1} = 2\pi\epsilon_0 \frac{r^2 + rd + (2rd + d^2)\,k + d^2\,k^2}{d} \quad . \qquad (3.7)$$

Gleichrichter

Moderne Avalanche-Halbleiter-Dioden (engl: "soft avalanche semiconductor diodes") haben sehr geringe parasitäre Kapazitäten und weisen kurze Erholzeiten auf. Eine Schaltung in Serie benötigt keine Widerstände zur Potentialäquilibrierung. Die Betriebsfrequenz kann vergleichsweise hoch gewählt werden, um die relativ kleinen Interelektroden-Kapazitäten der beiden Greinacher-Kondensatorstapel zu nutzen.

Bei einer Pump-Spannung zum Laden der Greinacher-Kaskade kann eine Spannung von $U_{in} \approx 100 kV$, also 70 $kV_{eff}$, verwendet werden. Die Dioden müssen Spannungen von 200 kV aushalten. Dies kann dadurch erreicht werden, dass Ketten von Dioden mit einer geringeren Toleranz verwendet werden. Es können beispielsweise zehn 20 kV Dioden verwendet werden. Dioden können z.B. Dioden der Firma Philips mit der Bezeichnung BY724, Dioden der Firma EDAL mit der Bezeichnung BR757-200A oder Dioden der Firma Fuji mit der Bezeichnung ESJA5320A sein.

Schnelle Sperr-Erholzeiten (reverse recovery time), z.B. $t_{rr} \approx 100$ ns für BY724, minimieren Verluste. Die Abmessung der Diode BY724 von 2,5 mm x 12,5 mm erlaubt es, alle 1000 Dioden für die Schaltvorrichtung in einer einzigen äquatorialen Ebene für eine kugelförmige Hochspannungsquelle unterzubringen.

Anstelle von Festkörperdioden können auch Elektronenröhren eingesetzt werden, bei denen die Elektronenemission zur Gleichrichtung verwendet wird. Die Kette von Dioden kann durch eine Vielzahl ein maschenartig zueinander angeordneten Elektroden der Elektronenröhren gebildet werden, die mit den Halbkugelschalen verbunden sind. Jede Elektrode agiert einerseits als Kathode, andererseits als Anode.

Diskreter Kondensator-Stapel

Die zentrale Idee besteht darin, die konzentrischen nacheinander angeordneten Elektroden auf einer Äquatorebene durchzuschneiden. Die beiden resultierenden Elektroden-Stapel stellen die Kaskaden-Kondensatoren dar. Es ist lediglich notwendig, die Kette von Dioden an gegenüberliegende Elektroden über die Schnittebene hinweg anzuschließen. Es ist anzumerken, dass der Gleichrichter die Potentialunterschiede der nacheinander angeordneten Elektroden automatisch auf etwa 2 $U_{in}$ stabilisiert, was konstante Elektrodenabstände nahelegt. Die Antriebsspannung wird zwischen den beiden äußeren Hemisphären angelegt.

Ideale Kapazitätsverteilung

Wenn die Schaltung nur die Kapazitäten der Abb. 3 enthält, liefert der stationäre Betrieb eine Betriebsfrequenz f eine Ladung

$$Q = \frac{I_{\text{out}}}{f} . \qquad (3.8)$$

pro Vollwelle in die Last durch den Kondensator $C_0$. Jedes der Kondensatorpaare $C_{2k}$ und $C_{2k+1}$ übertragen somit eine Ladung (k+1) Q.

Die Ladungspumpe stellt eine Generator-Quellen-Impedanz

$$R_G = \frac{1}{2f} \sum_{k=0}^{N-1} \left( \frac{2k^2 + 3k + 1}{C_{2k}} + \frac{2k^2 + 4k + 2}{C_{2k+1}} \right) . \qquad (3.9)$$

dar. Dadurch reduziert ein Laststrom $I_{\text{out}}$ die DC-Ausgangsspannung gemäß

$$U_{\text{out}} = 2 N U_{\text{in}} - R_G I_{\text{out}} . \qquad (3.10)$$

Der Laststrom verursacht eine AC-Restwelligkeit am DC-Ausgang mit dem Spitze-zu-Spitze-Wert

$$\delta U = \frac{I_{\text{out}}}{f} \sum_{k=0}^{N-1} \frac{k+1}{C_{2k}} \; . \tag{3.11}$$

Wenn alle Kondensatoren gleich $C_k = C$ sind, ist die effektive Quellenimpedanz

$$R_G = \frac{8N^3 + 9N^2 + N}{12\, fC} \tag{3.12}$$

und der Spitze-zu-Spitze-Wert der AC-Welligkeit wird

$$\delta U = \frac{I_{\text{out}}}{fC} \frac{N^2 + N}{2} \; . \tag{3.13}$$

Für einen gegebenen Gesamtenergie-Speicher innerhalb des Gleichrichters reduziert ein kapazitives Ungleichgewicht zugunsten des Niederspannungsteils die Werte $R_G$ und $R_R$ geringfügig im Vergleich zur üblichen Wahl von gleichen Kondensatoren.

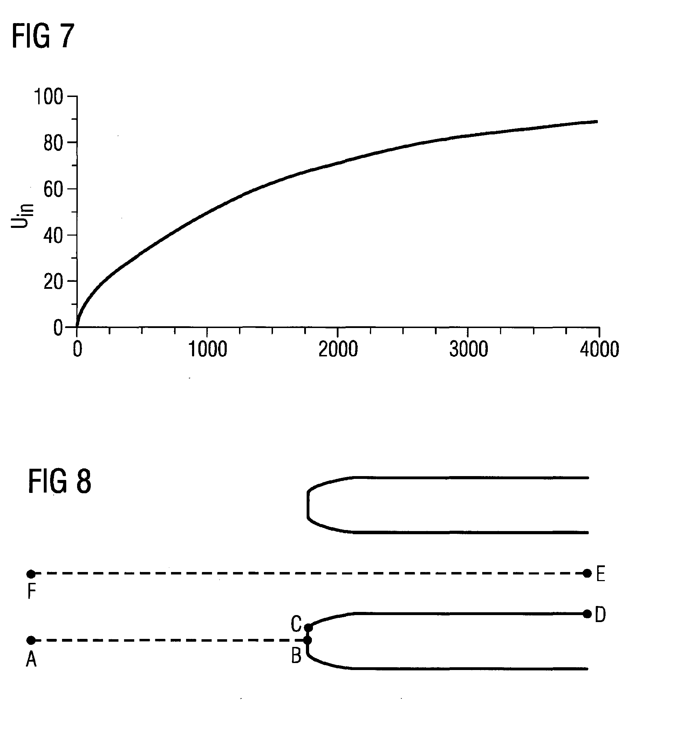

Fig. 7 zeigt das Aufladen einer ungeladenen Kaskade von $N = 50$ konzentrischen Halbkugeln, aufgetragen über die Anzahl von Pump-Zyklen.

Streukapazitäten

Jeglicher Ladungsaustausch zwischen den zwei Säulen reduziert die Effizienz der Vervielfacher-Schaltung, siehe Fig. 1, z.B. aufgrund der Streukapazitäten $C_j$ und der Sperrverzögerungsladungsverluste (engl: "reverse recovery charge loss") $q_j$ durch die Dioden $D_j$.

Die Grundgleichungen für die Kondensatorspannungen $U_k^{\pm}$ an der positiven und negativen Extrema der Spitzenantriebspannung U, wobei der Dioden-Durchlassspannungsabfall vernachlässigt wird, sind:

$$U_{2k}^{+} = u_{2k+1} \tag{3.14}$$

$$U_{2k}^{-} = u_{2k} \tag{3.15}$$

$$U_{2k+1}^{+} = u_{2k+1} \tag{3.16}$$

$$U_{2k+1}^{-} = u_{2k+2} \tag{3.17}$$

bis zum Index 2N - 2 und

$$U_{2N-1}^{+} = u_{2N-1} - U \tag{3.18}$$

$$U_{2N-1}^{-} = U \; . \tag{3.19}$$

Mit dieser Nomenklatur ist die durchschnittliche Amplitude der DC-Ausgangsspannung

$$U_{\text{out}} = \frac{1}{2} \sum_{k=0}^{2N-1} u_k \ . \qquad\qquad (3.20)$$

Der Spitze-zu-Spitze-Wert der Welligkeit der DC-Spannung ist

$$\delta U = \sum_{k=0}^{2N-1} (-1)^{k+1} u_k \ . \qquad (3.21)$$

Mit Streukapazitäten $C_i$ parallel zu den Dioden $D_i$ sind die Grundgleichungen für die Variablen $U_{-1} = 0$, $U_{2N} = 2\,U$, und das tridiagonale Gleichungssystem ist

$$C_{k-1} u_{k-1} - (C_{k-1} + C_k) u_k + (C_k - c_k) u_{k+1} = \begin{cases} Q & \forall k \text{ even} \\ 0 & \forall k \text{ odd} . \end{cases} \qquad (3.22)$$

Sperrverzögerungsladungen (engl: "reverse recovery charges")

Endliche Sperrverzögerungszeiten $t_{rr}$ der begrenzten Dioden verursachen einen Ladungsverlust von

$$q_D = \eta\, Q_D \qquad\qquad (3.23)$$

mit $\eta = f\, t_{rr}$ und $Q_D$ für die Ladung pro Vollwelle in Vorwärtsrichtung. Gl. (3.22) wird dann zu

$$C_{k-1} u_{k-1} - (C_{k-1} + (1-\eta)C_k)\, u_k + ((1-\eta)C_k - c_k)\, u_{k+1} = \begin{cases} Q & \forall k \text{ even} \\ 0 & \forall k \text{ odd} . \end{cases} \qquad (3.24)$$

Kontinuierlicher Kondensatorstapel

Kapazitive Übertragungsleitung

In Greinacher-Kaskaden nehmen die Gleichrichterdioden im Wesentlichen die AC-Spannung auf, verwandeln sie in DC-Spannung und akkumulieren diese zu einer hohen DC-Ausgangsspannung. Die AC-Spannung wird von den beiden Kondensator-Säulen auf die Hochspannungselektrode geleitet, und durch die Gleichrichter-Ströme und Streukapazitäten zwischen den beiden Säulen gedämpft.

Für eine hohe Anzahl N von Stufen kann diese diskrete Struktur durch eine kontinuierliche Übertragungsleitung-Struktur angenähert werden.

Für die AC-Spannung stellt der Kondensatoraufbau einen longitudinale Impedanz mit einer längenspezifischen Impedanz $\mathfrak{Z}$ dar. Streukapazitäten zwischen den beiden Säulen führen eine längenspezifische Shunt-Admittanz $\mathfrak{Y}$ ein. Der Spannungsstapelung der Gleichrichter-Dioden bewirkt eine zusätzliche spezifische Stromlast $\mathfrak{J}$, die propor-tional ist zum DC-Laststrom $I_{out}$ und zur Dichte der Anzapfungen entlang der Übertragungsleitung.

Die Grundgleichungen für die AC-Spannung U (x) zwischen den Säulen und dem AC-Längsstrom I (x) sind

$$I' = \mathfrak{Y} U + \mathfrak{J} \qquad\qquad (3.25)$$

$$U' = 3I. \qquad (3.26)$$

Die allgemeine Gleichung ist eine erweiterte Telegraphengleichung

$$U'' - \frac{3'}{3} U' - 3\mathfrak{Y} U = 3\mathfrak{I}. \qquad (3.27)$$

Im Allgemeinen ist die Spitze-zu-Spitze-Welligkeit am DC-Ausgang gleich der Differenz der AC-Spannungsamplitude an beiden Enden der Übertragungsleitung

$$\delta U = U(x_0) - U(x_1). \qquad (3.28)$$

Zwei Randbedingungen sind für eine eindeutige Lösung dieser Differentialgleichung zweiter Ordnung erforderlich.

Eine der Randbedingungen kann $U(X_0) = U_{in}$ sein, gegeben durch die AC-Antriebsspannung zwischen den DC-Niederspannungsenden der beiden Säulen. Die andere natürliche Randbedingung bestimmt den AC-Strom am DC-Hochspannungsende $x = x_1$. Die Randbedingung für eine konzentrierte terminale AC-Impedanz $Z_1$ zwischen den Säulen ist

$$U'(x_1) = \frac{3(x_1)}{Z_1} U(x_1). \qquad (3.29)$$

Im unbelasteten Fall $Z_1 = \infty$ ist die Randbedingung U' $(X_1) = 0$.

Konstanter Elektrodenabstand

Für einen konstanten Elektrodenabstand t ist der spezifische Laststrom

$$\mathfrak{I} = \frac{\iota\pi I_{out}}{t}, \qquad (3.30)$$

so dass die Verteilung der AC-Spannung geregelt ist durch

$$\mathfrak{I}'' - \frac{3'}{3} U' - 3\mathfrak{Y} U = 3\mathfrak{I}. \qquad (3.31)$$

Die durchschnittliche DC Ausgangsspannung ist dann

$$U_{out} = \frac{2 U_{in}}{t} \int_0^{Nt} U(x)\,dx \qquad (3.32)$$

und die DC-Spitze-zu-Spitze-Welligkeit der DC-Spannung ist

$$\delta U = U(Nt) - U(0) \ .\qquad (3.33)$$

Optimaler Elektrodenabstand

Der optimale Elektrodenabstand sorgt für eine konstante elektrische Gleichstrom-Feldstärke 2 E bei dem geplanten DC Laststrom. Der spezifische AC-Laststrom entlang der Übertragungsleitung ist positionsabhängig

$$\mathfrak{J} = \frac{i\pi E I_{out}}{U} \ .\qquad (3.34)$$

Die AC-Spannung folgt

$$U U'' - \frac{\mathfrak{J}'}{\mathfrak{J}} U U' - \mathfrak{J}\mathfrak{Y} U^2 = \mathfrak{J} \, i\pi E I_{out} \ .\qquad (3.35)$$

Die Elektrodenabstände ergeben sich aus den lokalen AC-Spannungsamplituden $t(x) = U(x)/E$.

Die DC-Ausgangsspannung bei dem geplanten DC-Laststroms ist $U_{out} = 2Ed$. Eine Verringerung der Last erhöht stets die Spannungen zwischen den Elektroden, daher kann ein Betrieb mit wenig oder ohne Last das zulässige E und die maximale Belastbarkeit der Gleichrichtersäulen überschreiten. Es kann daher empfehlenswert sein, das Design für einen unbelasteten Betrieb zu optimieren.

Für jede gegebene Elektrodenverteilung, die anders ist als diejenige bei Auslegung für einen geplanten DC-Laststroms, ist die AC-Spannung entlang der Übertragungsleitung und damit die DC-Ausgangsspannung geregelt durch die Gl. (3.27).

Lineare Kaskade

Für eine lineare Kaskade mit flachen Elektroden der Breite w, Höhe h und einem Abstand s zwischen den Säulen sind Übertragungsleitung-Impedanzen

$$\mathfrak{z} = \frac{2}{i\epsilon_0 \omega \, wh} \ .\qquad \mathfrak{Y} = \frac{i\epsilon_0 \omega \, w}{s} \ .\qquad (3.36)$$

Lineare Kaskade - Konstanter Elektrodenabstand

Die inhomogene Telegraphengleichung ist

$$U'' - \frac{2}{hs} U = \frac{I_{out}}{f \epsilon_0 \, wh \, t} \ .\qquad (3.37)$$

Unter Annahme einer Leitung, die sich von $x = 0$ bis $x = d = Nt$ erstreckt und die durch $U_{in} = U(0)$ betrieben wird, und einer Ausbreitungskonstante von $\gamma^2 = 2/(h{*}s)$, lautet die Lösung

$$U(x) = \frac{\cosh \gamma x}{\cosh \gamma d} U_{in} + \left( \frac{\cosh \gamma x}{\cosh \gamma d} - 1 \right) \frac{Ns}{2f \epsilon_0 dw} I_{out} \ .\qquad (3.38)$$

Die Dioden zapfen im Wesentlichen die AC-Spannung an, richten sie gleich und akkumulieren sie entlang der Übertragungsleitung. Die durchschnittliche DC-Ausgangsspannung ist somit

$$U_{\text{out}} = \frac{2}{t} \int_0^d U(x)\,dx \ , \qquad\qquad (3.39)$$

oder - explizit -

$$U_{\text{out}} = 2N \frac{\tanh \gamma d}{\gamma d} U_{\text{in}} + \left( \frac{\tanh \gamma d}{\gamma d} - 1 \right) \frac{N^2 s}{f \epsilon_0 d w} I_{\text{out}} \ . \qquad (3.40)$$

Eine Reihenerweiterung bis zur dritten Ordnung nach γd gibt

$$U_{\text{out}} \approx 2N\, U_{\text{in}} \left( 1 - \frac{2}{3} \frac{d^2}{h s} \right) - \frac{2 N^2}{3 f} \frac{d}{\epsilon_0 h w} I_{\text{out}} \qquad (3.41)$$

und

$$\delta U \approx \frac{d^2}{h s} U_{\text{in}} + \frac{N}{f} \frac{d}{2 \epsilon_0 h w} I_{\text{out}} \ . \qquad (3.42)$$

Die Laststrom-bezogenen Effekte entsprechen Gl. (3.12) und (3.13).

Lineare Kaskade - Optimaler Elektrodenabstand

Die Grundgleichung ist hier

$$U U'' - \frac{2}{h s} U^2 = \frac{E\, I_{\text{out}}}{f \epsilon_0 \, w h} \ . \qquad (3.43)$$

Es scheint, dass diese Differentialgleichung keine geschlossene analytische Lösung hat. Die implizite Lösung, die U'(0) = 0 erfüllt, ist

$$x = \int_{U(0)}^{U(x)} \frac{du}{\sqrt{ \frac{2}{h s} \left( u^2 - U^2(0) \right) + \frac{E\, I_{\text{out}}}{f \epsilon_0 \, w h} \log \frac{u}{U(0)} }} \ . \qquad (3.44)$$

Radiale Kaskade

Unter der Annahme eines Stapels konzentrischer Zylinderelektroden mit einer Radius-unabhängigen Höhe h und einem axialen Spalt s zwischen den Säulen wie in Fig. 4 gezeigt sind die radial-spezifischen Impedanzen

$$\mathfrak{Z} = \frac{1}{i \pi \epsilon_0 \omega r h} \ , \qquad\qquad \mathfrak{Y} = \frac{2 i \pi \epsilon_0 \omega r}{s} \ . \qquad (3.45)$$

Radiale Kaskade - Konstanter Elektrodenabstand

Mit einem äquidistanten radialen Elektrodenabstand t = (R-r)/N hat die Grundgleichung

$$U'' + \frac{1}{\rho} U' - \frac{2}{hs} U = \frac{I_{\text{out}}}{\epsilon_0 \omega h t \, \rho} \qquad (3.46)$$

die allgemeine Lösung

$$U(\rho) = A\, \mathrm{K}_0(\gamma\rho) + B\, \mathrm{I}_0(\gamma\rho) + \frac{I_{\text{out}}}{4\gamma f \epsilon_0 h t} \mathrm{L}_0(\gamma\rho) . \qquad (3.47)$$

mit $\gamma^2 = 2/(h{*}s)$. $\mathrm{K}_0$ und $\mathrm{I}_0$ sind die modifizierte Bessel-Funktionen und $\mathrm{L}_0$ ist die modifizierte STRUVE Funktion $\mathrm{L}_0$ nullter Ordnung.

Die Randbedingungen U'(r) = 0 am inneren Radius r und U (R) = $U_{\text{in}}$ am äußeren Radius R bestimmen die beiden Konstanten

$$A = \frac{U_{\text{in}} \mathrm{I}_1(\gamma r) - \frac{I_{\text{out}}}{4\gamma f \epsilon_0 h t} \left[ \mathrm{I}_1(\gamma r)\mathrm{L}_0(\gamma R) - \mathrm{I}_0(\gamma R)\left(\mathrm{L}_1(\gamma r) + \frac{2}{\pi}\right) \right]}{\mathrm{I}_0(\gamma R)\mathrm{K}_1(\gamma r) + \mathrm{I}_1(\gamma r)\mathrm{K}_0(\gamma R)} \qquad (3.48)$$

$$B = \frac{U_{\text{in}} \mathrm{K}_1(\gamma r) - \frac{I_{\text{out}}}{4\gamma f \epsilon_0 h t} \left[ \mathrm{K}_1(\gamma r)\mathrm{L}_0(\gamma R) + \mathrm{K}_0(\gamma R)\left(\mathrm{L}_1(\gamma r) + \frac{2}{\pi}\right) \right]}{\mathrm{I}_0(\gamma R)\mathrm{K}_1(\gamma r) + \mathrm{I}_1(\gamma r)\mathrm{K}_0(\gamma R)} \qquad (3.49)$$

sodass

$$\begin{aligned}
U(\rho) = \; & U_{\text{in}} \frac{\mathrm{I}_0(\gamma\rho)\mathrm{K}_1(\gamma r) + \mathrm{I}_1(\gamma r)\mathrm{K}_0(\gamma\rho)}{\mathrm{I}_0(\gamma R)\mathrm{K}_1(\gamma r) + \mathrm{I}_1(\gamma r)\mathrm{K}_0(\gamma R)} \\
& + \frac{I_{\text{out}}}{4\gamma f \epsilon_0 h t} \left[ \mathrm{L}_0(\gamma\rho) - \mathrm{L}_0(\gamma R)\frac{\mathrm{I}_0(\gamma\rho)\mathrm{K}_1(\gamma r) + \mathrm{I}_1(\gamma r)\mathrm{K}_0(\gamma\rho)}{\mathrm{I}_0(\gamma R)\mathrm{K}_1(\gamma r) + \mathrm{I}_1(\gamma r)\mathrm{K}_0(\gamma R)} \right. \\
& \left. - \left(\mathrm{L}_1(\gamma r) + \frac{2}{\pi}\right) \frac{\mathrm{I}_0(\gamma\rho)\mathrm{K}_0(\gamma R) - \mathrm{I}_0(\gamma R)\mathrm{K}_0(\gamma\rho)}{\mathrm{I}_0(\gamma R)\mathrm{K}_1(\gamma r) + \mathrm{I}_1(\gamma r)\mathrm{K}_0(\gamma R)} \right] . \qquad (3.50)
\end{aligned}$$

$\mathrm{K}_1$ und $\mathrm{I}_1$ sind die modifizierte Bessel-Funktionen und $\mathrm{L}_1$ die modifizierte Struve-Funktion $\mathrm{L}_1 = \mathrm{L}'_0 - 2/n$, alle erster Ordnung.

Die DC-Ausgangsspannung ist

$$U_{\text{out}} = \frac{2}{t} \int_r^R U(\rho)\, d\rho . \qquad (3.51)$$

Radiale Kaskade - Optimaler Elektrodenabstand

Der optimale lokale Elektrodenabstand ist t($\rho$) = U(p)/E, und die Grundgleichung wird zu

$$UU'' + \frac{1}{\rho}UU' - \frac{2}{hs}U^2 = \frac{E\,I_{\mathrm{out}}}{\epsilon_0 \omega h\,\rho} \qquad (3.52)$$

Es scheint, dass diese Differentialgleichung keine geschlossene analytische Lösung hat, sie kann aber numerisch gelöst werden.

Elektrodenformen

Äquipotentialflächen

Eine kompakte Maschine benötigt eine Maximierung der elektrischen Durchschlagfeldstärke. Generell glatte Oberflächen mit geringer Krümmung sollten für die Kondensatorelektroden gewählt werden. Die elektrische Durchschlagfeldstärke E skaliert in grober Näherung mit der inversen Quadratwurzel des Elektrodenabstands, so dass eine große Zahl von knapp beabstandeten Äquipotentialflächen mit geringeren Spannungsunterschieden gegenüber einigen wenigen großen Abständen mit großen Spannungsunterschieden vorzuziehen sind.

Minimale E-Feld Elektrodenkanten

Für einen im wesentlich ebenen Elektrodenaufbau mit äquidistantem Abstand und einer linearen Spannungsverteilung ist die optimale Kantenform als KIRCHHOFF-Form bekannt(siehe unten),

$$x = \frac{A}{2\pi}\ln\frac{1+\cos\vartheta}{1-\cos\vartheta} - \frac{1+A^2}{4\pi}\ln\frac{1+2A\cos\vartheta+A^2}{1-2A\cos\vartheta+A^2} \qquad (3.53)$$

$$y = \frac{b}{2} + \frac{1-A^2}{2\pi}\left(\arctan\frac{2A}{1-A^2} - \arctan\frac{2A\sin\vartheta}{1-A^2}\right). \qquad (3.54)$$

in Abhängigkeit der Parameter $\vartheta \in [0, \pi/2]$. Die Elektrodenform ist in Fig. 8 gezeigt. Die Elektroden verfügen über einen normalisierten Einheitsabstand und eine asymptotische Dicke 1 - A weit weg von der Kante, die sich stirnseitig zu einer vertikalen Kante mit der Höhe

$$b = 1 - A - \frac{2-2A^2}{\pi}\arctan A. \qquad (3.55)$$

verjüngt.

Der Parameter 0 < A < 1 stellt auch die inverse E-Feldüberhöhung aufgrund der Anwesenheit der Elektroden dar. Die Dicke der Elektroden kann beliebig klein sein, ohne bemerkbare E-Feldverzerrungen einzuführen.

Eine negative Krümmung, z. B. an den Mündungen entlang des Strahlpfades, reduzieren die E-Feld Amplitude weiter.

Dieses positive Ergebnis ist auf die Tatsache zurückzuführen, dass die Elektroden nur eine lokale Störung eines bereits existierenden E-Feldes herbeiführen.

Die optimale Form für freistehende Hochspannungselektroden sind ROGOWSKI- und BORDA-Profile, mit einem Spitzenwert in der E-Feld Amplitude von dem Zweifachen der unverzerrten Feldstärke.

Antriebsspannungsgenerator

Der Antriebsspannungsgenerator muss über eine hohe Wechselspannung bei hoher Frequenz bereitstellen. Die übliche Vorgehensweise ist es, eine mittlere AC-Spannung durch einen hoch isolierten Ausgangstransformator zu verstärken.

Störende interne Resonanzen, die von unvermeidbaren Wicklungskapazitäten und Streuinduktivitäten verursacht werden, machen den Entwurf eines Designs für einen solchen Transformator zu einer Herausforderung.

Eine Alternative kann eine Ladungspumpe sein, d.h. ein periodisch betriebener Halbleiter-Marx-Generator sein. Eine solche Schaltung liefert eine Ausgangsspannung mit einem Wechsel zwischen Masse und einer hohen Spannung einer einzigen Polarität, und lädt den ersten Kondensator der Kondensatorkette effizient auf.

Durchschlagsfestigkeit im Vakuum

$d^{-0.5}$-Gesetz

Es gibt eine Fülle von Hinweisen - aber keine endgültige Erklärung -, dass für die Elektrodenabstände über $d \approx 10^{-3}$ m die Durchbruchspannung ungefähr proportional zur Quadratwurzel des Abstandes ist. Das Durchbruch-E-Feld skaliert daher gemäß

$$E_{\max} = \sigma\, d^{-0.5} \qquad\qquad (A.1)$$

mit konstantem A in Abhängigkeit vom Elektrodenmaterial (siehe unten). Es scheint, dass für die Felder von $E \approx 20$ MV/m momentan verfügbare Elektrodenoberflächenmaterialien eine Elektrodenabstandsentfernung von $d \leq 10^{-2}$ m erfordern.

Oberflächenmaterialien

Der Überschlag zwischen den Elektroden im Vakuum hängt stark von der Materialoberfläche ab. Die Ergebnisse der CLIC Studie (A. Descoeudres et al. " DC Breakdown experiments for CLIC", Proceedings of EPAC08, Genoa, Italy, p.577, 2008) zeigen die Durchbruch-Koeffizienten

| material | $\sigma$ in $\left[\frac{MV}{\sqrt{m}}\right]$ | |
| --- | --- | --- |
| steel | 3.85 | |
| SS 316LN | 3.79 | 3.16 |
| Ni | 3.04 | |
| V | | 2.84 |
| Ti | | 2.70 |
| Mo | | 1.92 |
| Monel | 1.90 | |
| Ta | | 1.34 |
| Al | 1.30 | 0.45 |
| Cu | 1.17 | 0.76 |

Abhängigkeit von der Elektrodenfläche

Es gibt Anzeichen dafür, dass die Elektrodenfläche einen wesentlichen Einfluss auf die Durchbruch-Feldstärke hat. So gilt:

$$E_{\max} \approx 58 \cdot 10^6\, \frac{V}{m} \left(\frac{A_{\mathrm{eff}}}{1\,cm^2}\right)^{-0.25} \qquad\qquad (A.2)$$

für Kupfereletroden-Oberflächen und $2*10^{-2}$ mm Elektrodenabstand. Für planare Elektroden aus rostfreiem Stahl mit $10^{-3}$ m Abstand gilt:

$$E_{\max} \approx 57.38 \cdot 10^6 \frac{V}{m} \left( \frac{A_{\text{eff}}}{1\,cm^2} \right)^{-0.12} \qquad (A.3)$$

Form des elektrostatischen Feldes

Dielektrischer Nutzungsgrad

Es ist allgemein anerkannt, dass homogene E-Felder die größten Spannungen zulassen. Der dielektrische SCHWAIGER Nutzungsgrad-Faktor $\eta$ ist als das Inverse der lokalen E-Feldüberhöhung aufgrund von Feldinhomogenitäten definiert, d.h. das Verhältnis des E-Feldes einer idealen flachen Elektrodenanordnung und das Spitzen-Oberflächen-E-Feld der Geometrie unter Betrachtung gleicher Referenzspannungen und Abständen.

Er stellt die Nutzung des Dielektrikums in Bezug auf E-Feld-Amplituden dar. Für kleine Abstände d < $6*10^{-3}$m scheinen inhomogene E-Felder die Durchbruchspannung zu erhöhen.

Krümmung der Elektrodenoberfläche

Da die E-Feld Inhomogenitäts-Maxima an den Elektrodeoberflächen auftreten, ist das relevante Maß für die Elektrodenform die mittlere Krümmung H = (k1+k2)/2.

Es gibt verschiedene Oberflächen, die das Ideal von verschwindenden, lokalen mittleren Krümmungen über große Flächen erfüllen. Zum Beispiel sind Katenoide Rotationsflächen mit H = 0 dar.

Jede rein geometrische Maßnahme wie $\eta$ oder H kann nur eine Annäherung an das tatsächliche Durchbruch-Verhalten darstellen. Lokale E-Feld-Inhomogenitäten haben einen nichtlokalen Einfluss auf die Durchbruchgrenze und können sogar die allgemeine Gesamtfeldstärke verbessern.

Konstante E-Feld Elektrodenoberflächen

Fig. 8 zeigt KIRCHHOFF Elektrodenkanten bei A = 0,6 für ein vertikales E-Feld. Die Felderhöhung innerhalb des Elektrodenstapels ist 1/A = 1.6. Die Stirnseiten sind flach.

Eine Elektrodenoberfläche stellt eine Äquipotenziallinie des elektrischen Feldes analog zu einer freien Oberfläche einer strömenden Flüssigkeit dar. Eine spannungsfreie Elektrode folgt der Strömungsfeldlinie. Mit der komplexen räumlichen Koordinate z = x + iy erfüllt jede analytische Funktion w(z) die POISSON-Gleichung. Die Randbedingung für die freie Strömungsflache ist äquivalent mit einer konstanten Größe der (konjugierten) Ableitung v einer möglichen Funktion w

$$\bar{v} = \frac{dw}{dz}. \qquad (A.4)$$

Jede mögliche Funktion $w(\bar{v})$ über eine Strömungsgeschwindigkeit $\bar{v}$ oder eine Hodographen-Ebene führt zu einer z-Abbildung der Ebene

$$z = \int \frac{dw}{\bar{v}} = \int \frac{1}{\bar{v}} \frac{dw}{d\bar{v}} d\bar{v} . \qquad (A.5)$$

Ohne Beschränkung der Allgemeinheit kann die Größe der Ableitung auf der Elektrodenoberfläche auf Eins normiert werden, und die Höhe DE kann im Vergleich zu AF als A bezeichnet werden (siehe Abb. 6). In der $\bar{v}$-Ebene bildet die Kurve CD dann auf arc i → 1 auf dem Einheitskreis ab.

Die Punkte in Fig. 8 A und F entsprechen 1/A, B dem Ursprung, C i, D und E entsprechen 1. Das komplette Strömungsbild wird im ersten Quadranten des Einheitskreises abgebildet. Die Quelle der Strömungslinien ist 1/A, die der Senke 1.

Zwei Spiegelungen an der imaginären Achse und dem Einheitskreis erweitern dieses Strömungsmuster über die gesamte komplexe $\bar{v}$-Ebene. Die Potenzialfunktion $\omega$ wird somit durch vier Quellen auf $\bar{v}$-Positionen + A, -A, 1/A, -1/A und zwei Senken der Stärke 2 auf $\pm$ 1 definiert.

$$w = \log(\bar{v}-A)+\log(\bar{v}+A)+\log\left(\bar{v}-\frac{1}{A}\right)+\log\left(\bar{v}+\frac{1}{A}\right)-2\log(\bar{v}-1)-2\log(\bar{v}+1)\,.$$

$$(A.6)$$

Dessen Ableitung ist

$$\frac{dw}{d\bar{v}}=\frac{1}{\bar{v}-A}+\frac{1}{\bar{v}+A}+\frac{1}{\bar{v}-\frac{1}{A}}+\frac{1}{\bar{v}+\frac{1}{A}}-\frac{2}{\bar{v}-1}-\frac{2}{\bar{v}+1} \qquad (A.7)$$

und so

$$z-z_0=\int\frac{1}{\bar{v}}\left(\frac{1}{\bar{v}-A}+\frac{1}{\bar{v}+A}+\frac{1}{\bar{v}-\frac{1}{A}}+\frac{1}{\bar{v}+\frac{1}{A}}-\frac{2}{\bar{v}-1}-\frac{2}{\bar{v}+1}\right)d\bar{v} \qquad (A.8)$$

An der freien Grenze CD ist Strömungsgeschwindigkeit $\bar{v}=e^{i\varphi}$, damit ist d $\bar{v}=i\,\bar{v}\,d\varphi$ und

$$z-z_0=\int_{-\frac{\pi}{2}}^{-\vartheta}\frac{i}{e^{i\varphi}-A}+\frac{i}{e^{i\varphi}+A}+\frac{i}{e^{i\varphi}-\frac{1}{A}}+\frac{i}{e^{i\varphi}+\frac{1}{A}}-\frac{2i}{e^{i\varphi}-1}-\frac{2i}{e^{i\varphi}+1}\,d\varphi \quad (A.9)$$

mit $z_0 = i\,b$ der Punkt C. Eine analytische Integration liefert Gl. (3.54).

Bezugszeichenliste

| | |
|---|---|
| 9 | Hochspannungskaskade |
| 11 | Eingang |
| 13 | Diode |
| 15 | Kondensator |
| 17 | Kondensator |
| 19 | Diode |
| 21 | Ausgang |
| 23 | erster Satz von Kondensatoren |
| 25 | zweiter Satz von Kondensatoren |
| 29 | Beschleuniger |
| 37 | zentrale Elektrode |
| 39 | äußere Elektrode |
| 71 | erster Teilchenstrahl |
| 73 | zweiter Teilchenstrahl |
| 75 | Interaktionszone |
| 77 | erste Quelle |
| 79 | zweite Quelle |
| 83 | erste Fängerelektrode |
| 85 | zweite Fängerelektrode |
| 31 | Hochspannungsquelle |
| 33 | Zwischenelektrode |

| | |
|---|---|
| 35 | Hochspannungskaskade |
| 39', 39" | Elektroden-Schalenhälfte |
| 41 | erster Kondensatorkette |
| 43 | zweite Kondensatorkette |
| 45 | Wechselspannungsquelle |
| 47 | äquatorialer Schnitt |
| 49 | Diode |
| 51 | erster Beschleunigungskanal |
| 52 | zweiter Beschleunigungskanal |
| 63 | Elektronenröhren |
| 65 | Kathode |
| 67 | Anode |
| 81 | Hochspannungsquelle |

**Patentansprüche**

1. Beschleuniger (29) zur Beschleunigung von zwei Strahlen (71, 73) geladener Teilchen und zum Erzeugen einer Kollision zwischen den beiden Strahlen (71, 73), aufweisend:

- eine Potentialfeld-Vorrichtung (33, 35, 37, 39, 45) zum Erzeugen eines elektrostatischen Potentialfeldes, das derart beschaffen ist, dass durch das elektrostatische Feld die zwei Strahlen (71, 73) der geladenen Teilchen beschleunigbar bzw. entschleunigbar sind,
- eine Reaktionszone (75), in der die Kollision der zwei Strahlen (71, 73) stattfindet,
- eine erste Beschleunigungsstrecke (51) für den ersten Strahl (71) im Potentialfeld, welche erste Beschleunigungsstrecke (51) auf die Reaktionszone (75) hin gerichtet ist,
- eine zweite Beschleunigungsstrecke (52) für den zweiten Strahl (73) im Potentialfeld, welche zweite Beschleunigungsstrecke (53) auf die Reaktionszone (75) hin gerichtet ist,
wobei die Reaktionszone (75) geometrisch in Bezug auf das Potentialfeld und auf die erste und zweite Beschleunigungsstrecke (51, 52) derart angeordnet ist, dass die Teilchen der zwei Strahlen (71, 73) zur Reaktionszone (75) hin entlang der ersten Beschleunigungsstrecke (51) und der zweiten Beschleunigungsstrecke (52) beschleunigbar sind, und nach Wechselwirkung in der Reaktionszone (75) und Durchtritt durch die Reaktionszone (75) im Potentialfeld wieder entschleunigbar sind, sodass die durch die Potentialfeld-Vorrichtung aufgewendete Energie zur Beschleunigung der beiden Strahlen (71, 73) zur Reaktionszone (75) hin durch die Entschleunigung zumindest teilweise rückgewinnbar ist, **dadurch gekennzeichnet, dass** die Potentialfeld-Vorrichtung einen Kondensatorstapel aus konzentrisch zueinander angeordneten Elektroden umfasst,
- mit einer ersten Elektrode (37), welche auf ein erstes Potential bringbar ist,
- mit einer zweiten Elektrode (39), die zur ersten Elektrode (37) konzentrisch angeordnet ist und auf ein zweites, vom ersten Potential unterschiedliches Potential bringbar ist, sodass sich zwischen der ersten Elektrode und der zweiten Elektrode ein beschleunigendes Potential ausbildet,
- wobei sich die Reaktionszone (75) im Inneren der ersten Elektrode (37) befindet,
wobei die Potentialfeld-Vorrichtung eine oder mehrere Zwischenelektroden (33), die konzentrisch zwischen der ersten Elektrode (37) und der zweiten Elektrode (39) angeordnet sind, umfasst,
und wobei eine Schaltvorrichtung (35) vorhanden ist, mit der die Elektroden (33, 37, 39) des Kondensatorstapels verbunden sind und welche derart ausgebildet ist, dass bei Betrieb der Schaltvorrichtung (35) die konzentrisch zueinander angeordneten Elektroden (33, 37, 39) des Kondensatorstapels auf anwachsende Potentialstufen gemäß der Reihenfolge ihrer Anordnung bringbar sind.

2. Beschleuniger (29) nach Anspruch 1, aufweisend:

- eine erste Entschleunigungsstrecke für den ersten Strahl (71) im Potentialfeld, welche erste Entschleunigungsstrecke von der Reaktionszone (75) weg gerichtet ist, und/oder
- eine zweite Entschleunigungsstrecke für den zweiten Strahl (73) im Potentialfeld, welche zweite Entschleunigungsstrecke von der Reaktionszone (75) weg gerichtet ist.

3. Beschleuniger (29) nach einem der Ansprüche 1 bis 2, aufweisend:

- eine erste Quelle (77) zur Bereitstellung geladener Teilchen für den ersten Strahl (71) und zur Einspeisung derselben in die erste Beschleunigungsstrecke (51) und/oder
- eine zweite Quelle (79) zur Bereitstellung geladener Teilchen für den zweiten Strahl (73) und zur Einspeisung derselben in die zweite Beschleunigungsstrecke (52).

4. Beschleuniger nach einem der Ansprüche 1 bis 3, aufweisend:

- einen ersten Fänger (83) für die entschleunigten Teilchen des ersten Strahls (71), der sich am Ende der ersten Strahlstrecke befindet und insbesondere negativ geladen ist, und/oder
- einen zweiten Fänger (85) für die entschleunigten Teilchen des zweiten Strahls (73), der sich am Ende der zweiten Strahlstrecke befindet und insbesondere negativ geladen ist.

5. Beschleuniger nach einem der Ansprüche 1 bis 4, wobei die ersten Teilchen Protonen sind und/oder die zweiten Teilchen Bor-Ionen sind und das Potentialfeld insbesondere derart ausgebildet ist, dass eine Kollisionsenergie von über 600 keV erreichbar ist.

**Claims**

1. Accelerator (29) for accelerating two beams (71, 73) of charged particles and for producing a collision between the two beams (71, 73), having:

- a potential field device (33, 35, 37, 39, 45) for generating an electrostatic potential field, which is composed such that the two beams (71, 73) of the charged particles can be accelerated or decelerated, respectively, by the electrostatic field,
- a reaction zone (75), in which the collision of the two beams (71, 73) occurs,
- a first acceleration distance (51) for the first beam (71) in the potential field, which first acceleration distance (51) is directed toward the reaction zone (75),
- a second acceleration distance (52) for the second beam (73) in the potential field, which second acceleration distance (52) is directed toward the reaction zone (75),
wherein the reaction zone (75) is geometrically arranged in relation to the potential field and the first and second acceleration distances (51, 52) such that the particles of the two beams (71, 73) can be accelerated toward the reaction zone (75) along the first acceleration distance (51) and the second acceleration distance (52), and after interacting in the reaction zone (75) and passing through the reaction zone (75) can be decelerated again in the potential field, so that the energy applied by the potential field device to accelerate the two beams (71, 73) toward the reaction zone (75) can be at least partially reclaimed by the deceleration, **characterized in that** the potential field device comprises a capacitor stack made of electrodes arranged concentrically to one another,
- having a first electrode (37), which can be brought to a first potential,
- having a second electrode (39), which is arranged concentrically to the first electrode (37) and can be brought to a second potential, which is different from the first potential, so that an accelerating potential forms between the first electrode and the second electrode,
- wherein the reaction zone (75) is located in the interior of the first electrode (37), wherein the potential field device comprises one or more intermediate electrodes (33), which are arranged concentrically between the first electrode (37) and the second electrode (39), and wherein
a switching device (35) is provided, to which the electrodes (33, 37, 39) of the capacitor stack are connected and which is designed such that during operation of the switching device (35), the electrodes (33, 37, 39) of the capacitor stack, which are arranged concentrically to one another, can be brought to increasing potential steps according to the sequence of their arrangement.

2. Accelerator (29) according to Claim 1, having:

- a first deceleration distance for the first beam (71) in the potential field, which first deceleration distance is directed away from the reaction zone (75), and/or
- a second deceleration distance for the second beam (73) in the potential field, which second deceleration distance is directed away from the reaction zone (75).

3. Accelerator (29) according to any one of Claims 1 to 2, having:

- a first source (77) for providing charged particles for the first beam (71) and for feeding them into the first acceleration distance (51) and/or
- a second source (79) for providing charged particles for the second beam (73) and for feeding them into the second acceleration distance (52).

4. Accelerator according to any one of Claims 1 to 3, having:

- a first catcher (83) for the decelerated particles of the first beam (71), which is located at the end of the first beam distance and is in particular negatively charged, and/or
- a second catcher (85) for the decelerated particles of the second beam (73), which is located at the end of the second beam distance and is in particular negatively charged.

5. Accelerator according to any one of Claims 1 to 4, wherein the first particles are protons and/or the second particles are boron ions and the potential field is designed in particular such that a collision energy of greater than 600 keV is achievable.

**Revendications**

1. Accélérateur (29) servant à l'accélération de deux faisceaux (71, 73) de particules chargées et à la production d'une collision entre les deux faisceaux (71, 73), comprenant :

- un dispositif à champ de potentiel (33, 35, 37, 39, 45) pour la production d'un champ de potentiel électrostatique qui est créé de façon que les deux faisceaux (71, 73) de particules chargées puissent être accélérés ou décélérés par le champ électrostatique,
- une zone réactionnelle (75) dans laquelle se produit la collision des deux faisceaux (71, 73),
- un premier trajet d'accélération (51) pour le premier faisceau (71) dans le champ de potentiel, lequel premier trajet d'accélération (51) est dirigé vers la zone réactionnelle (75),
- un second trajet d'accélération (52) pour le second faisceau (73) dans le champ de potentiel, lequel second trajet d'accélération (53) est dirigé vers la zone réactionnelle (75),
la zone réactionnelle (75) étant disposée, géométriquement, par rapport au champ de potentiel et aux premier et second trajets d'accélération (51, 52), de façon que les particules des deux faisceaux (71, 73) puissent être accélérées vers la zone réactionnelle (75) le long du premier trajet d'accélération (51) et du second trajet d'accélération (52), et après interaction dans la zone réactionnelle (75) et traversée de la zone réactionnelle (75), puissent être de nouveau décélérées dans le champ de potentiel, de manière à ce que l'énergie utilisée par le dispositif à champ de potentiel pour l'accélération des deux faisceaux (71, 73) vers la zone réactionnelle (75) puisse être récupérée, au moins partiellement, par la décélération,
**caractérisé en ce que** le dispositif à champ de potentiel comprend un empilage de condensateurs formé d'électrodes disposées concentriquement les unes par rapport aux autres,
- avec une première électrode (37) qui peut être portée à un premier potentiel,
- avec une seconde électrode (39) qui est disposée concentriquement par rapport à la première électrode (37) et qui peut être portée à un second potentiel, différent du premier potentiel,
de manière à ce qu'il se forme un potentiel accélérateur entre la première électrode et la seconde électrode,
- la zone réactionnelle (75) se trouvant à l'intérieur de la première électrode (37),
le dispositif à champ de potentiel comprenant une ou plusieurs électrodes intermédiaires (33) qui sont disposées de manière concentrique entre la première électrode (37) et la seconde électrode (39),
et un dispositif de commutation (35) auquel sont reliées les électrodes (33, 37, 39) de l'empilage de condensateurs étant présent et exécuté de façon que, lors du fonctionnement du dispositif de commutation (35), les électrodes (33, 37, 39) de l'empilage de condensateurs disposées concentriquement les unes par rapport aux autres peuvent être portées à des niveaux de potentiel croissants dans l'ordre dans lequel elles sont disposées.

2. Accélérateur (29) selon la revendication 1, comprenant :

- un premier trajet de décélération pour le premier faisceau (71) dans le champ de potentiel, lequel premier trajet de décélération s'écarte de la zone réactionnelle (75) et/ou
- un second trajet de décélération pour le second faisceau (73) dans le champ de potentiel, lequel second trajet de décélération s'écarte de la zone réactionnelle (75).

3. Accélérateur (29) selon l'une des revendications 1 à 2, comprenant :

- une première source (77) pour la mise à disposition de particules chargées pour le premier faisceau (71) et pour l'injection de ces particules dans le premier trajet d'accélération (51) et/ou
- une seconde source (79) pour la mise à disposition de particules chargées pour le second faisceau (73) et pour l'injection de ces particules dans le second trajet d'accélération (52).

4. Accélérateur selon l'une des revendications 1 à 3, comprenant :

- un premier piège (83) pour les particules décélérées du premier faisceau (71), qui est situé à l'extrémité du premier trajet de faisceau et est notamment chargé négativement et/ou
- un second piège (85) pour les particules décélérées du second faisceau (73), qui est situé à l'extrémité du second trajet de faisceau et est notamment chargé négativement.

5. Accélérateur selon l'une des revendications 1 à 4, les premières particules étant des protons et/ou les secondes particules étant des ions de bore et le champ de potentiel étant notamment créé de manière à ce qu'il soit possible d'atteindre une énergie de collision supérieure à 600 keV.

FIG 1

## FIG 2

FIG 3

FIG 4

FIG 5

FIG 6

# FIG 7

# FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• US 3386883 A

**In der Beschreibung aufgeführte Nicht-Patentliteratur**

• **A. DESCOEUDRES et al.** DC Breakdown experiments for CLIC. *Proceedings of EPAC08,* 2008, 577